# EUROPEAN PATENT APPLICATION

(11) **EP 4 335 535 A1**
(43) Date of publication of application: **13.03.2024**
(21) Application number: 22195105.6
(22) Date of filing: 12.09.2022
(51) Int. Cl.: B01D 61/14, B01D 67/00, B01D 69/02, B01D 71/48

(54) **MEMBRANE FOR SEPARATION OF BODY FLUIDS**

(71) Applicant: Oxyphen GmbH Filtration Group, 8620 Wetzikon (CH)
(72) Inventor: The designation of the inventor has not yet been filed
(74) Representative: Weickmann & Weickmann PartmbB

(57) **Abstract**

The present invention provides bi- or multilayered membranes comprising a track-etched membrane and at least one layer of a porous pre-filter material with pores having a pore size, which is equal to or larger than the pore size of the track-etched membrane, and which bi- or multilayered membrane comprises a hydrophilic coating on at least the track-etched membrane. The invention also provides a process for the preparation of such bi- or multilayered membrane as well as the use of the membrane for separation of cells or other larger items from fluids, especially from body fluids.

## Description

The present invention relates to a bi- or multi-layered membrane comprising a track-etched membrane and at least one layer of a porous pre-filter material, a process for preparation of such bi- or multi-layered membrane as well as the use of the membrane for the separation of cells or other larger items from fluid, especially from body fluids and more specifically for the separation of blood into blood cells and serum or plasma.

### Background and Prior Art

A huge number of filter materials have been developed for separating larger constituents from aqueous solutions and especially for separating cells from body fluids for analytic or therapeutic purposes. Especially, separation of cells from whole blood to obtain plasma or serum requires a filter, which allows to eliminate blood cells in an efficient manner. Many patent documents describe filters that can be used for such or similar purposes, cf. US 6,045,899, US 5,906,742, US 6,565,782, US 7,125,493, US 6,939,468, EP 0,946,354, EP 0,846,024, US 6,440,306, US 6,110,369, US 5,979,670, US 5,846,422, US 6,277,281, EP 1,118,377, EP 0,696,935 and EP 1,089,077. A commercially available example of such plasma separation membrane is the Vivid^{™} Membrane of Pall Corporation, which is an asymmetric PES membrane coated with a substance like PVP.

However, using such well-known membranes, the cells are caught in the sponge-like structure of the membrane and slowly clog the membrane leading to a decreased flow rate. The rough geometry of such membranes and the cells inside the membrane prevent any successful cleaning or regeneration steps.

Also track-etched membranes have been considered as filter materials as they possess uniform and smooth surfaces and precise pore sizes. Due to these properties, track-etched membrane filters are an excellent choice for fractionation of particles. The smooth surface of the track-etched membrane can be washed and cells or particles collected on the membranes can be removed by backflushing.

Furthermore, the track-etched membrane is a high precision surface filter that is suitable for separating particles or cells from liquids with a highly specific cut-off size. The pore geometry of track-etched membrane is either cylindrical, hourglass-shaped or cigar-shaped. (Apel, Nuclear Instruments and Methods in Physics Research B, 179, 2001, 55-62; Apel, Radiation Measurements, 34, 2001, 559-566; Apel, Colloid Journal, 66, 6, 2004, 649-656) In all such cases, the pore is a straight pore without branching. This enables the membrane to catch all objects that have to be separated on the surface of the membrane without loading the membrane with these objects like in case of depth filters (e.g., expanded PTFE membranes, sintered membranes or PES membranes). As explained above, such membranes with sponge-like structures capture the particles within the membrane leading to clogging of the membrane and a continuously decreasing filter performance.

A further advantage of track-etched membranes lies in the fact that the smooth surface is especially suitable for cell separation, because it prevents cells of being destroyed by rough pore surfaces. In order to enable liquids to pass the membrane, the liquid has to be able to wet the membrane. In case of a polyethylene terephthalate (PET) track-etched membrane, the membrane is naturally slightly hydrophilic, whereas in case of a polycarbonate (PC) track-etched membrane, the membrane has to be coated with a hydrophilic agent. In any case, applying a hydrophilic coating onto the membrane supports the wetting and, thus, the separation of blood cells from whole blood.

One property that makes separation of whole blood into its constituents very challenging is clotting. If the separation process takes too long, the blood drop clots and the clot blocks the pores of porous material, also of track-etched membranes.

As a result, no further transport of plasma or serum through the membrane will occur.

The object underlying the present invention was to overcome the shortcomings and problems of the prior art and to provide suitable membranes for blood cell separation from whole blood, but also for providing improved filtration properties for other filtering applications.

### Summary of the Invention

The object has been solved by the invention as defined in the appended claims.

According to a first aspect, the present invention provides a bi- or multi-layered membrane comprising a track-etched membrane and at least one layer of a porous pre-filter material with pores having size which is equal to or larger than the pore size of the track-etched membrane, and wherein the bi- or multi-layered membrane comprises a hydrophilic coating on at least the track-etched membrane.

According to a second aspect of the present invention, a process for the preparation of an inventive bi- or multi-layered membrane is provided, which process comprises
a) providing a track-etched membrane and at least one porous pre-filter material with pores having a size which is equal to or larger than the pore size of the track-etched membrane;
b) laminating at least one layer of a porous pre-filter material onto the track-etched membrane;
c) treating the obtained bi- or multi-layered membrane with a hydrophilic coating solution; and
d) optionally, drying the bi- or multi-layered membrane.

In an alternative embodiment of this second aspect of the invention, the process for the preparation of an inventive bi- or multi-layered membrane comprises
a') providing a track-etched membrane and at least one layer of a hydrophilic porous pre-filter material with pores having sizes which are equal to or larger than the pore size of the track-etched membrane;
b') treating the track-etched membrane with a hydrophilic coating solution;
c') optionally, drying the track-etched membrane; and
d') laminating at least one layer of the hydrophilic porous pre-filter material onto the coated track-etched membrane.

In a third aspect of the present invention, the inventive bi- or multi-layered membranes are used for separation of cells or other larger items from fluids, especially from body fluids. Preferably, this aspect includes the separation of blood into blood cells and serum or plasma, especially for diagnostic and point of care or home applications.

### Detailed Description of the Invention

The present invention is based on the realization that the problems encountered by the prior art can be avoided by providing and using the bi- or multilayered membrane of the present invention.

More specifically, the inventive bi- or multilayered membranes show superior filtering efficiency, especially when filtering samples like body fluids and especially whole blood. The pre-filter material of the bi- or multilayered membrane absorbs the fluid, e.g., the blood sample, and spreads the fluid inside the filter material. The pre-filter material also at least partly absorbs larger items and possibly also compounds which lead to clotting of blood. As the fluid passes through the pre-filter material, the wider distribution of the fluid in the pre-filter also leads to a broader application of the fluid to the membrane and an optimized wetting of the track-etched membrane area. Consequently, more of the track-etched membrane's pores are covered by the fluid compared to the situation in which a blood drop is applied directly to the membrane surface, and the capillary forces of the membrane's pores can act more efficiently to channel the fluid through the membrane.

Furthermore, the hydrophilic coating applied onto at least the track-etched membrane also enhances the wetting and the spreading of the fluid on the membrane. Thus, especially for filtration of whole blood, the liquid parts of the blood, i.e., serum or plasma can be readily absorbed by the pores before the clotting process sets in.

Larger particles and especially blood cells are retained not only on the membrane surface as with some prior art products, but also within the pre-filter material. Thus, blocking of the pores by retained blood cells is also minimized for the inventive membranes.

Summarizing the above detailed description of the inventive membranes and their properties and effectivity, the invention provides a filter material which exhibits superior properties and is especially suitable for separation of blood cells from whole blood to obtain blood plasma or serum in an efficient manner.

Within the context of the invention, the porous pre-filter material can either be made of a porous solid or from suitable fibers in the form of a woven or a non-woven material. The pores or the porous structure of the pre-filter material have to be larger or at least equal to the pore size of the track-etched membrane to generate the pre-filter effect. Thus, the pre-filter material absorbs larger constituents of a fluid sample whereas the fluid itself and items smaller than the pore size of the pre-filter material can accumulate on the surface of the track-etched membrane and, depending on the pore size, pass through the track-etched membrane. To enable the pre-filter to absorb for instance whole blood and pass the plasma or serum to the track-etched membrane, which performs the final separation step, the blood preferably also effectively wets the pre-filter. This can either be achieved by using a hydrophilic or other suitable base material for the pre-filter or by providing a hydrophilic coating not only on the track-etched membrane, but also on the pre-filter material.

In a preferred embodiment of the invention, the porous pre-filter material is a natural or synthetic, woven or non-woven polymeric fiber material. In an especially preferred embodiment of the invention, the porous pre-filter material itself has hydrophilic properties, but is usually not water-soluble. Alternatively, if a porous pre-filter material is used, which is a respective natural or synthetic, woven or non-woven polymeric fiber material exhibiting hydrophobic properties, preferably such materials are treated by applying a hydrophilic coating onto such material.

According to a most preferred embodiment of the present invention, a hydrophilic coating is provided on both the track-etched membrane and the porous filter material.

According to the present invention, the bi- or multi-layered membrane comprises one layer of a track-etched membrane and one or several layers of a porous pre-filter material. The two or more layers of the inventive membrane can either be loosely stacked and held together in an appropriate manner or in a suitable device and appropriate measures can be taken to avoid separation of the layers of such stack. However, in preferred embodiments of the present invention, at least one layer of a pre-filter material is laminated onto the track-etched membrane. In preferred embodiments, at least one layer of a non-woven pre-filter material is laminated onto the track-etched membrane. According to further preferred embodiments of the invention, the membrane contains two or more layers of a pre-filter material, and all layers of the membrane are joined by lamination.

Within the context of the present invention, the more than one layers of pre-filter material can include multiple layers of the same pre-filter material or multiple layers of different materials or a combination thereof. In some instances, it is preferred to use layers of different pre-filter materials, e.g., with, towards the track-etched membrane, decreasing pore sizes. Furthermore, it is possible and a further preferred embodiment, to use a pre-filter material which in one layer includes different pore sizes, especially decreasing pore sizes relative to the track-etched membrane. While also in such specific embodiments of the present invention, the pore size of all existing pre-filter material layers is equal to or larger than the pore size of the track-etched membrane, an even higher filtering efficiency can be achieved by using a pre-filter material with decreasing pore sizes. Also, an enhanced spreading of the fluid and wetting of the membrane is obtained due to the fact that clogging of the various layers is minimized due to the continuously decreasing pore size and the fact that the largest items are retained in a different layer than smaller items.

The track-etched membrane layer, which is present in the inventive bi- or multi-layered membranes, can be made of any material known to the skilled person as applicable in this context. Track-etched membranes are commercially available or can be obtained by treating a membrane base material under conditions forming pores of the desired size and density by a track-etching treatment. Such track-etching treatment conditions are well known to the skilled person and are disclosed in many prior art documents, e.g., the documents cited in the above Background and Prior Art section. According to preferred embodiments of the present invention, the material of the track-etched membrane is selected from polyethylene terephthalate (PET), polycarbonate (PC), polyimide (PE), polyvinylidine fluoride (PVDF), polyetheretherketon (PEEK), ethylenetetrafluoroethylene (ETFE) or from other polymers having similar properties. In especially preferred embodiments, the material of the track-etched membrane is PET or PC.

As mentioned above, a hydrophilic coating can be applied to the track-etched membrane only, to the track-etched membrane and at least one layer of porous pre-filter material, or to all layers of the inventive membrane. In preferred embodiments of the invention, the hydrophilic coating is applied to all layers of the inventive membrane.

The coating can be applied to some of the layers before assembling the bi- or multilayered membrane. In preferred embodiments, however, the coating is applied to all layers of the membrane, and in especially preferred embodiments, the coating is applied to an already assembled bi- or multilayered membrane. Preferably, the layers of the assembled bi- or multilayered membrane are joined by lamination before applying the coating. In such case, the coating will also cover the intersection(s) between the track-etched membrane and the pre-filter material(s).

In case of lamination of an already coated track-etched membrane and a suitable pre-filter material, especially a non-woven pre-filter material, under certain circumstances, the coating of the track-etched membrane could be damaged. Also, in some instances, using different precoated materials of the membrane and the pre-filter could lead to an inhomogeneous coating and, thus, inhomogeneous wetting of the surfaces. A slower passage of the plasma or serum through the membrane could result from such inhomogeneous coating. Accordingly, in especially preferred embodiments of the invention, the bi- or multilayered membrane contains only layers which are first joined by lamination and thereafter treated with the hydrophilic coating.

Depending on the intended use and application of the inventive bi- or multilayered membrane, the thickness of the track-etched membrane can be adapted as desired and as explained above for the pre-filter material. In preferred embodiments of the invention, the track-etched membrane has a thickness of 1 to 100 µm, preferably 2 to 50 µm and more preferably 5 to 25 µm.

The pore size of the track-etched membrane is also selected as best suited for the intended use of the membrane. In preferred embodiments of the invention and for well-established uses like separation of whole blood into blood cells and plasma or serum, the pore size of the track-etched membrane is 0.1 to 5 µm and more preferably 0.3 to 1.2 µm. The pore density can also be varied according to the intended use, however, for most purposes a preferred pore density lies between 10,000 to 1,000,000,000 pores per cm², preferably 2,000,000 to 100,000,000 pores per cm².

As mentioned above, the porous pre-filter material can be made of any material that is suitable for achieving the intended filtration effect. In preferred embodiments, the pre-filter material is a woven or a non-woven material, non-woven materials being especially preferred. Such materials can be produced from any polymeric fiber, with polyester; polyolefin, polyimide, cellulose, and nylon being fiber materials, which are considered as preferred within the context of the present invention.

According to the invention, the pore size of the porous pre-filter material is equal to or larger than the pore size of the track-etched membrane. Preferred pore sizes of the pre-filter material are 5 to 10,000 µm, more preferably between 10 and 500 µm, and especially preferably between 20 and 100 µm.

Pore sizes mentioned in the context for the present invention are defined as the pore diameter, especially the mean pore diameter.

The thickness of the layer or layers of porous pre-filter material can be adapted to the intended use and should especially take into account the volumes to be treated per unit of filter area. Also, the nature of the fluid applied onto the filter and the proportion or mass of substances or cells to be removed from the fluid by filtration need to be considered for determining the appropriate size and thickness of the pre-filter material in the inventive membranes. In preferred embodiments, the thickness of the layers of porous pre-filter material is between 10 and 2,000 µm, more preferably between 20 and 1,000 µm and most preferably between 50 and 250 µm. In further preferred embodiments, the overall thickness of the porous pre-filter material on the track-etched membrane is 75 to 300 µm.

Hydrophilic coating solutions, which can be applied to the bi- or multilayered membrane of the present invention, can be selected from commercially available coating solutions or custom made for the intended use by selecting appropriate hydrophilic materials and preparing a respective solution in a suitable solvent. In preferred embodiments of the invention, the hydrophilic coating solution is a polyvinylpyrrolidone (PVP) solution or a sulphonated coating, a coating containing alcoholic or carboxylic groups or any other coating that supports the wetting process of the membrane. In some embodiments, a preferred grade of hydrophilic property is reached if a contact angle of <69° is reached.

In addition to the above detailed description regarding the inventive bi- or multi-layered membrane itself, also processes for producing such membranes are subjects of the present invention. All features mentioned above which include or refer to process steps for obtaining the respective materials, are also considered disclosed within the manufacturing process. Basic and additional information regarding the process is provided in the following:
In a second aspect of the present invention, a process for the preparation of an inventive bi- or multilayered membrane is disclosed. Such process comprises provision of the various layers of the bi- or multilayered membrane as defined above and joining the layers in an appropriate manner. According to a preferred embodiment of the present invention, such process comprises
a) providing a track-etched membrane and at least one porous pre-filter material with pores having a pore size, which is equal to or larger than the pore size of the track-etched membrane,
b) laminating at least one layer of a porous pre-filter material onto the track-etched membrane, and
c) treating the obtained bi- or multilayered membrane with a hydrophilic coating solution and,
d) optionally, drying the bi- or multilayered membrane.

In an alternative preferred embodiment of the inventive process, the following steps are taken:
a') providing a track-etched membrane and at least one layer of a hydrophilic porous pre-filter material with pores having a pore size, which is equal to or larger than the pore size of the track-etched membrane,
b') treating the track-etched membrane with a hydrophilic coating solution,
c') optionally, drying the track-etched membrane, and
d') laminating at least one layer of the hydrophilic porous pre-filter material onto the track-etched membrane.

While in principle the layers can be stacked and held together by appropriate means, in preferred embodiments of the inventive process, the laminating steps b) or d') are performed. These steps include stacking the membrane layers and applying a pressure of 1 to 5 bars, preferably 2 to 3 bars. The temperature applied in preferred embodiments of this lamination step is 120 to 180°C, preferably 130 to 160°C and most preferably 135 to 155°C.

In further preferred embodiments, the treating steps c) or b'), respectively, are performed by applying an aqueous solution of polyvinylpyrrolidone or a sulphonated coating, a coating containing alcoholic and/or carboxylic groups or another suitable coating. Most preferably, a polyvinylpyrrolidone solution is applied at a concentration of 0.1 to 50 g/L.

Further conditions and process steps can be adapted as appropriate for the production of bi- or multilayered membranes, and especially further characteristics of the materials to be employed can be chosen based on the definitions provided above. More specifically, the material of the porous pre-filter material, its thickness and its pore size, the nature of the track-etched membrane material, its thickness, its pore size and pore density are as defined above. Furthermore, instead of laminating the track-etched membrane to at least one pre-filter material layer, which is preferred, in alternative embodiments also a stacking of the layers and an attachment or mounting of the layers can also be achieved by securing or pinning or clamping the layers together in an appropriate frame or device.

A third aspect of the present invention is the use of an inventive bi- or multilayered membrane or of a membrane prepared according to the inventive process for separation of cells or other items from fluids. The particularly effective wetting of the track-etched membrane, which can be achieved by the inventive combination of the various layers and the resulting superior wetting of the membrane leads to a highly efficient separation of material and is especially useful in the application of separating cells from body fluids. Considering the problems encountered in the prior art with clotting of blood during such separation processes, the inventive bi-or multilayered membrane provides a novel and superior concept for such applications.

The inventive membranes can be applied in larger separation units for diagnostic purposes; however, it can also be effectively used in smaller devices for point of care and home applications. One example of such point of care or home applications is a lateral flow analysis test system, in which the inventive membrane can be used as a first filter, which separates the cellular components form the fluid, especially from blood, while the fluid moves through the test system for determination of the presence or absence of certain substances and molecules.

Furthermore, the bi- or multilayered membranes of the present invention can also be used in other automated analysis systems.

### Examples

The following Examples further illustrate the invention. Examples 1 to 5 demonstrate the importance of a hydrophilic or other suitable coating and show that standard track-etched membranes themselves, even with a hydrophilic coating (PVP), are only of limited use and success. Without the combination with a pre-filter, the blood clots and blocks the pores before the plasma or serum can pass through the membrane. If a pre-filter, in the present Examples a non-woven material connected to the membrane, is used, the blood is absorbed and spread inside the pre-filter. This leads to a pre-filtering of the clotting substances and a wide distribution of the blood over the membrane surface, instead of the blood drops staying at a certain spot. In the inventive Examples, the plasma or serum is dragged inside the pores of the track-etched membrane by the capillary force and all objects larger than the pore diameter stay on the side with the pre-filter. Typically, the plasma or serum are then either absorbed by a suitable material or transported away by microfluidic structures for further diagnostic tests.

The plasma or serum can be used for different purposes, diagnostic test are not a restriction of the present invention. The membrane presented in the inventive Examples is not only restricted to applications related to blood, but it can also be used for other body fluids like saliva and urine that contain objects that have to be separated from the liquid.

### Example 1

A polyester track-etched membrane (pore density of 100,000,000 pores/cm², thickness 12 µm and pore size 0.4 µm) was laminated with a polyester sheath-core non-woven by applying a pressure of 3.0 bar and a temperature of 144°C. The laminated membrane was afterwards dip-coated with an aqueous solution of PVP (molecular weight of 40,000 g/mol and a concentration of 1.5 g/L) and dried. To verify the functionality, a drop of blood was placed on the non-woven side of the membrane and the track-etched membrane side pressed on a filter paper. The drop of blood was fully absorbed within 20 seconds and the plasma or serum detected on the filter paper after passing the track-etched membrane.

### Example 2

A polyester track-etched membrane (pore density of 22,000,000 pores/cm², thickness 22 µm and pore size 1.0 µm) was laminated with a polyester sheath-core non-woven by applying a pressure of 3.0 bar and a temperature of 144°C. The laminated membrane was afterwards dip-coated with an aqueous solution of PVP (molecular weight of 40'000 g/mol and a concentration of 1.5 g/L) and dried. To verify the functionality, a drop of blood was placed on the non-woven side of the membrane and the track-etched membrane side pressed on a filter paper. The drop of blood was fully absorbed within 20 seconds and the plasma or serum detected on the filter paper after passing the track-etched membrane.

### Example 3

A polyester track-etched membrane (pore density of 22,000,000 pores/cm², thickness 22 µm and pore size 1.0 µm) was laminated with a polyester sheath-core non-woven by applying a pressure of 3.0 bar and a temperature of 144°C. To verify the functionality, a drop of blood was placed on the non-woven side of the membrane and the track-etched membrane side pressed on a filter paper. The drop of blood was only partially absorbed by the non-woven side after 10 minutes. Without applying the hydrophilic coating, the blood clotted and blocked the pores before it could be fully absorbed by the pre-filter.

### Example 4

A polyester track-etched membrane (pore density of 22,000,000 pores/cm², thickness 22 µm and pore size 1.0 µm) was used without lamination and non-woven material as pure membrane. The membrane was dip-coated with an aqueous solution of PVP (molecular weight of 40,000 g/mol and a concentration of 1.5 g/L) and dried. To verify the functionality, a drop of blood was placed on the membrane and the track-etched membrane pressed on a filter paper. The drop of blood clotted after roughly 20% of the plasma or serum passed the track-etched membrane and no further transport of plasma or serum through the membrane could be observed.

### Example 5

A polyester track-etched membrane (pore density of 22,000,000 pores/cm², thickness 22 µm and pore size 1.0 µm) was used without lamination and non-woven material as pure membrane. To verify the functionality, a drop of blood was placed on the membrane and the track-etched membrane pressed on a filter paper. The drop of blood clotted, and no visual passing of plasma or serum could be observed.

## Claims

1. Bi- or multi-layered membrane comprising a track-etched membrane and at least one layer of a porous pre-filter material with pores having a pore size, which is equal to or larger than the pore size of the track-etched membrane, and which bi-or multi-layered membrane comprises a hydrophilic coating on at least the track-etched membrane.

2. Bi- or multi-layered membrane according to claim 1, wherein the porous pre-filter material is a hydrophilic, natural or synthetic, woven or non-woven polymeric fiber material.

3. Bi- or multilayered membrane according to claim 1 or 2, wherein a hydrophilic coating is provided on both the track-etched membrane and the porous pre-filter material.

4. Bi- or multi-layered membrane according to claim 1, wherein at least one layer of a non-woven pre-filter material is laminated onto the track-etched membrane, preferably wherein all layers of the membrane are joined by lamination.

5. Bi-or multi-layered membrane according to claims 1 or 2, wherein the material of the track-etched membrane is selected from polyethylene terephthalate (PET), polycarbonate (PC), polyimide (PI), polyvinylidene fluoride (PVDF), polyether ether ketone (PEEK), ethylene tetrafluoro ethylene (ETFE) and other polymers having similar properties, preferably PET or PC.

6. Bi-or multi-layered membrane according to anyone of claims 1 to 3, wherein the thickness of the track-etched membrane is 1 to 100 µm, preferably 2 to 50 µm and more preferably 5 to 25 µm.

7. Bi-or multi-layered membrane according to anyone of claims 1 to 4, wherein the pore size of the track-etched membrane is 0.1 to 5 µm, preferably 0.3 to 1.2 µm. and wherein the pore density is 10,000 to 1,000,000,000 pores per cm².

8. Bi-or multi-layered membrane according to anyone of claims 1 to 5, wherein the porous pre-filter material is a woven or non-woven material, preferably a non-woven material, made from polyester, polyolefine, polyimide, cellulose, nylon.

9. Bi-or multi-layered membrane according to anyone of claims 1 to 6, wherein the pore size of the porous pre-filter material is between 5 and 1000 µm, preferably between 10 and 500 µm and more preferably between 20 and 100 µm.

10. Bi-or multi-layered membrane according to anyone of claims 1 to 7, which comprises two or more layers of porous pre-filter materials having different pore sizes laminated onto the track-etched membrane and wherein the pore size decreases from the membrane surface to the track-etched membrane at the bottom of the multi-layered membrane.

11. Bi-or multi-layered membrane according to anyone of claims 1 to 8, wherein the hydrophilic coating solution is a polyvinyl pyrrolidone (PVP) solution or a sulfonated coating, a coating containing alcoholic and carboxylic groups.

12. Process for the preparation of a bi- or multi-layered membrane according to anyone of claims 1 to11, wherein the process comprises:
a) providing a track-etched membrane and at least one porous pre-filter material with pores having a pore size which is equal to or larger than the pore size of the track-etched membrane;
b) laminating at least one layer of a porous pre-filter material onto the track-etched membrane;
c) treating the obtained bi- or multi-layered membrane with a hydrophilic coating solution; and
d) optionally drying the bi- or multi-layered membrane,
or, alternatively,
a') providing a track-etched membrane and at least one layer of a hydrophilic porous pre-filter material with pores having a pore size which is equal to or larger than the pore size of the track-etched membrane;
b') treating the track-etched membrane with a hydrophilic coating solution;
c') drying the track-etched membrane; and
d') laminating at least one layer of the hydrophilic porous pre-filter material onto the track-etched membrane.

13. Process according to claim 12, wherein steps b) or d'), respectively, are performed by stacking the membrane layers and applying a pressure of 1 to 5 bar, preferably 2 to 3 bar, and a temperature of 120 to 180°C, preferably 130 to 160°C, more preferably 135 to 155°C.

14. Process according to claim 12 or 13, wherein in steps c) or b'), respectively, an aqueous solution of polyvinyl pyrrolidone or a sulfonated coating, a coating containing alcoholic and carboxylic groups is applied, preferably a polyvinyl pyrrolidone solution at a concentration of 0.1 to 50 g/L.

15. Use of a bi- or multilayered membrane according to anyone of claims 1 to 11 or prepared according to anyone of claims 12 to 14, for separation of cells or other larger items from fluids, especially from body fluids, preferably for separation of blood into blood cells and serum or plasma, especially for diagnostic and point of care or home applications.

16. Use according to claims 15, wherein the bi- or multilayered membrane is included in an automated analysis system, especially a lateral flow analysis test system.
